# EUROPÄISCHE PATENTANMELDUNG

(11) **EP 1 640 843 A1**
(43) Veröffentlichungstag der Anmeldung: **29.03.2006**
(21) Anmeldenummer: 04022976.7
(22) Anmeldetag: 27.09.2004
(51) Int. Cl.: G06F 1/00

(54) **Erzeugung und Überprüfung elektronischer Signaturen**

(71) Anmelder: SIEMENS AKTIENGESELLSCHAFT, 80333 München (DE)
(72) Erfinder: Franke, Markus, 85356 Freising (DE); Pfaff, Oliver, 10827 Berlin (DE)

(57) **Zusammenfassung**

Zur Erzeugung elektronischer Signaturen wird für ein zu signierendes computerbasiertes Objekt ein das computerbasierte Objekt eindeutig identifizierender Wert berechnet. Eine Zusammenfassung aus einer Mehrzahl von computerbasierte Objekte eindeutig identifizierenden Werten und einer einen Verschlüsselungszeitpunkt bezeichnende Zeitangabe wird mittels eines privaten Signaturschlüssels einer vertrauenswürdigen Instanz zumindest auszugsweise verschlüsselt.

## Beschreibung

Die vorliegende Erfindung betrifft ein Verfahren zur Erzeugung elektronischer Signaturen, ein Verfahren zur Überprüfung einer elektronischen Signatur, ein Steuerungsprogramm zur Erzeugung elektronischer Signaturen und ein Steuerungsprogramm zur Überprüfung einer elektronischen Signatur.

Durch ständig steigende Rechenleistung von Datenverarbeitungseinrichtungen und mathematische Schwächen einiger Algorithmen unterliegen Verschlüsselungsverfahren einer Art Alterungsprozeß. Bei digitalen Signaturen stellt sich mittel- bis langfristig das Problem einer ausreichenden Beweiskraft angesichts potentieller zukünftiger Manipulationsmöglichkeiten. Zur Lösung dieses Problems können für archivierte digital signierte Daten von Zeit zu Zeit erneute, mit Zeitstempeln versehene digitale (Archiv-)Signaturen erzeugt werden.

Entsprechend ETSI ES 201 733 (Electronic Signature Formats) und ETSI TS 101 903 (XAdES - XML Advanced Electronic Signatures) wird für jedes zu archivierende Signaturobjekt eine Archivsignatur berechnet. Daher hängt die Verarbeitungskomplexität linear von der Anzahl der zu bearbeitenden Signaturobjekte ab. Dasselbe gilt für den in der Signatur-Interoperabilitätsspezifikation, Abschnitt B5 (SigI-B5) des Bundesamts für Sicherheit in der Informationstechnologie (BSI) vorgeschlagenen Ansatz.

Das auf der INFORMATION SECURITY SOLUTIONS EUROPE CONFERENCE (ISSE 2002), Paris, 2.-4. Oktober 2002 vorgeschlagene Konzept des Verbundprojekts ArchiSig sieht vor, einen Hashwertbaum (Merkle) zur Erstellung einer mit einem Zeitstempel versehenen Archivsignatur zu verwenden. Zur Überprüfung einer solchen Archivsignatur für ein archiviertes Objekt sind neben der Archivsignatur als Wurzel des Hashwertbaums und dem archivierten Objekt, das einen Endknoten im Hashwertbaum darstellt, ein objektspezifischer Authentifizierungspfad zwischen Wurzel und Endknoten erforderlich. Die Verarbeitungskomplexität bei einer Überprüfung der Archivsignatur für ein archiviertes Objekt hängt daher von der Anzahl der archivierten Objekte ab.

Der vorliegenden Erfindung liegt die Aufgabe zugrunde, Verfahren zur Erzeugung und Überprüfung von Archivsignaturen zu schaffen, deren Verarbeitungskomplexität im wesentlichen unabhängig von der Anzahl archivierter computerbasierter Objekte ist, und geeignete Implementierungen anzugeben.

Erfindungsgemäß wird diese Aufgabe durch ein Verfahren zur Erzeugung elektronischer Signaturen mit den in Anspruch 1, ein Verfahren zur Überprüfung einer elektronischen Signatur mit den in Anspruch 8, ein Steuerungsprogramm zur Erzeugung elektronischer Signaturen mit den in Anspruch 9 und ein Steuerungsprogramm zur Überprüfung einer elektronischen Signatur mit den in Anspruch 10 angegebenen Merkmalen gelöst. Vorteilhafte Weiterbildungen der vorliegenden Erfindung sind in den abhängigen Ansprüchen angegeben.

Ein wesentlicher Aspekt der vorliegenden Erfindung liegt darin, daß zur Erzeugung elektronischer Signaturen, zunächst für ein zu signierendes computerbasiertes Objekt ein das computerbasierte Objekt eindeutig identifizierender Wert berechnet wird und anschließend eine Zusammenfassung aus einer Mehrzahl von computerbasierte Objekte eindeutig identifizierenden Werten und einer einen Verschlüsselungszeitpunkt bezeichnende Zeitangabe mittels eines privaten Signaturschlüssels einer vertrauenswürdigen Instanz zumindest auszugsweise verschlüsselt wird. Auszugsweise bedeutet beispielsweise, daß lediglich ein die Zusammenfassung aus der Mehrzahl von computerbasierte Objekte eindeutig identifizierenden Werten und der den Verschlüsselungszeitpunkt bezeichnende Zeitangabe eindeutig identifizierender Wert mittels des privaten Signaturschlüssels der vertrauenswürdigen Instanz verschlüsselt wird.

Computerbasierte Objekte sind beispielsweise ohne Beschränkung der Allgemeinheit dieses Begriffs Betriebssysteme, Steuerungs- oder Anwendungsprogramme, durch Betriebssysteme, Steuerungs- oder Anwendungsprogramme bereitgestellte Dienste, Leistungsmerkmale, Funktionen oder Prozeduren, Zugriffsrechte auf Peripheriegeräte sowie auf einem Speichermedium befindliche Daten. Funktionen oder Prozeduren umfassen dabei insbesondere auch eine Geldausgabe an einem Geldautomaten. Vertrauenswürdige Instanzen können beispielsweise Aussteller elektronischer Zertifikate, staatliche Behörden oder Zertifizierungsstellen im Sinne des § 2 Abs. 4 SigG sein.

Ein weiterer wesentlicher Aspekt der vorliegenden Erfindung liegt darin, daß zur Überprüfung einer elektronischen Signatur für ein signiertes computerbasiertes Objekt entsprechend einer vorgegebenen Funktion ein das computerbasierte Objekt eindeutig identifizierender Wert berechnet wird. Außerdem wird eine Archivsignatur, die eine Mehrzahl von computerbasierte Objekte eindeutig identifizierenden Werten und eine einen Verschlüsselungszeitpunkt bezeichnende Zeitangabe umfaßt und mittels eines privaten Signaturschlüssels einer vertrauenswürdigen Instanz verschlüsselt ist, mittels eines öffentlichen Schlüssels der vertrauenswürdigen Instanz entschlüsselt. Der dem signierten computerbasierten Objekt zugeordnete eindeutig identifizierende Wert wird aus der entschlüsselten Archivsignatur extrahiert. Abschließend werden der berechnete und der extrahierte eindeutig identifizierende Wert auf Übereinstimmung verglichen.

Bevorzugt sind das erfindungsgemäße Verfahren zur Erzeugung elektronischer Signaturen und das erfindungsgemäße Verfahren zur Überprüfung einer elektronischen Signatur jeweils durch ein in einen Arbeitsspeicher einer Programmablaufsteuerungseinrichtung ladbares Steuerungsprogramm implementiert.

Unter Programmablaufsteuerungseinrichtung sind beispielsweise ohne Beschränkung der Allgemeinheit dieses Begriffs PCs, Notebooks, Server, PDAs, Mobiltelefone, Geldautomaten, Steuerungsmodule in der Automatisierungs-, Fahrzeug-, Kommunikations- oder Medizintechnik zu verstehen - allgemein Einrichtungen, in denen Programme ablaufen.

Entsprechend einer vorteilhaften Weiterbildung des erfindungsgemäßen Verfahrens zur Erzeugung elektronischer Signaturen wird der ein computerbasiertes Objekt eindeutig identifizierende Hash-Wert in ein Reference-Element für eine XML-Signatur eingebettet. Ebenso wird die den Verschlüsselungszeitpunkt bezeichnende Zeitangabe in ein Reference-Element eingebettet. Eine Mehrzahl von Reference-Elementen wird in ein Manifest-Element eingebettet. Für das Manifest-Element wird dann ein Hash-Wert berechnet und dieser mittels des privaten Signaturschlüssels der vertrauenswürdigen Instanz zur Erstellung einer Archivsignatur verschlüsselt. Außerdem wird ein signiertes computerbasiertes Objekt zur Archivierung in eine Datenstruktureinheit eingebettet wird, die ein Signaturobjekt-Element, ein Element für ein signiertes Objekt und ein Element für einen Verweis auf eine Archivsignatur mit Zeitstempel umfaßt. Des weiteren wird ein in das Manifest-Element eingebettetes Reference-Element mit einem Verweis auf die Datenstruktureinheit versehen. Auf diese Weise ergibt sich unter Ausnutzung bestehender Strukturvorgaben für XML-Signaturen eine besonders einfache Implementierung für eine Erzeugung einer elektronischen Archivsignatur, auch mit Unterstützung für abgesonderte (detached) PKCS#7/CMS-Signaturen.

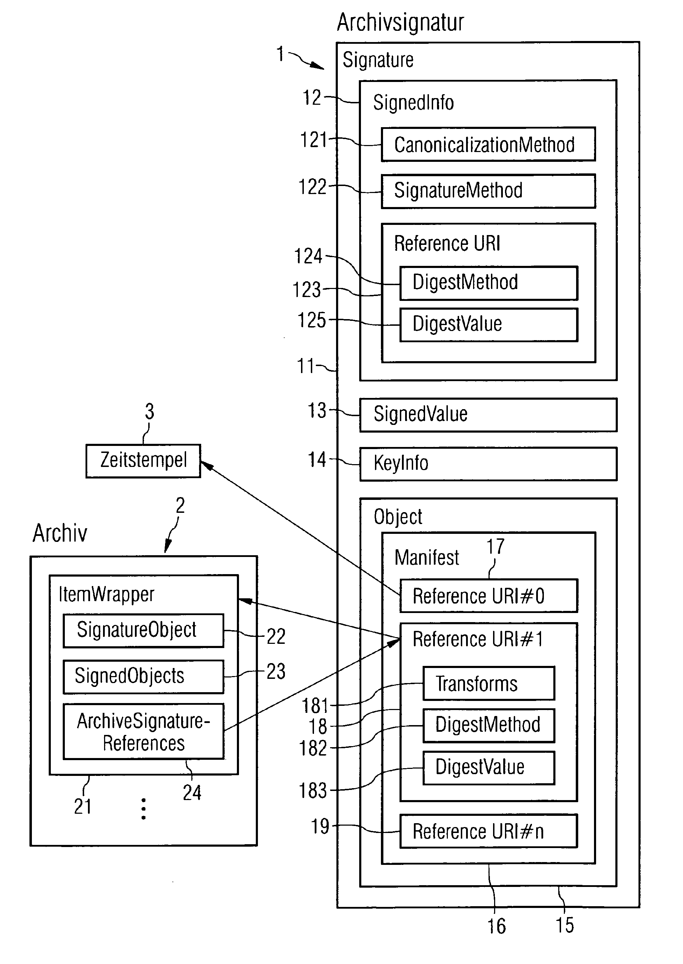

Die vorliegende Erfindung wird nachfolgend an einem Ausführungsbeispiel anhand der Zeichnung näher erläutert. Es zeigt die
- Figur: eine schematische Darstellung einer Archivsignatur und eines Archivs für computerbasierte signierte Objekte.

Entsprechend der Darstellung in der Figur wird zur Erzeugung einer elektronischen Signatur zunächst für ein zu signierendes computerbasierendes Objekt, beispielsweise ein elektronisches Dokument, ein das computerbasierte Objekt eindeutig identifizierender Wert berechnet. Der das computerbasierte Objekt eindeutig identifizierende Wert wird mittels eines Hash-Algorithmus berechnet und in ein Reference-Element 18 einer XML-Archivisgnatur 1 eingebettet.

Bei XML (extensible mark up language) handelt es sich um eine erweiterbare Beschreibungssprache, mit der Dokumentenstrukturen beschrieben werden. Um ein XML-Dokument zu strukturieren werden Inhaltskomponenten bzw. -elemente des XML-Dokuments mit Codes versehen. Diese Codes werden auch als Tags bezeichnet. Innerhalb des Reference-Elements 18 ist ein DigestMethod-Element 181 vorgesehen, durch das ein Algorithmus zur Berechnung eines ein computerbasiertes Objekt eindeutig identifizierenden Wertes spezifiziert werden kann. Für den das computerbasierte Objekt eindeutig identifizierenden Hash-Wert ist innerhalb des Reference-Elements 18 ein DigestValue-Element 183 vorgesehen. Außerdem umfaßt das Reference-Element 18 ein Transforms-Element 181 zur Angabe eines Umwandlungsalgorithmus, der vor der Berechnung des Hash-Werts ausgeführt wird. Darüber hinaus weist das Reference-Element ein als Uniform-Resource-Identifier (URI) bezeichnetes Attribut zur Referenzierung eines zu signierenden bzw. eines signierten Objekts auf.

Im vorliegenden Ausführungsbeispiel wird ein signiertes computerbasiertes Objekt zur Ablage in einem Archiv 2 in eine als Item-Wrapper 21 bezeichnete Datenstruktureinheit eingebettet. Die Datenstruktureinheit 21 umfaßt ein Signaturobjekt-Element 22, ein Element 23 für ein signiertes Objekt und ein Element 24 für einen Verweis auf die Archivsignatur 1. Die in die Datenstruktureinheit 21 eingebetteten Elemente 22 bis 24 können anhand im Transform-Element 181 spezifizierte Angaben extrahiert bzw. entpackt werden. Durch eine Verwendung von Datenstruktureinheiten für im Archiv gespeicherte Signaturobjekte und signierte Objekte ist eine einheitliche Darstellung und Behandlung dieser Objekte unabhängig vom Inhalt signierter computerbasierter Objekte möglich. Eine Aufgabe des Elements 23 für ein signiertes Objekt ist eine Bereitstellung einer Unterstützung für abgesonderte (detached) PKCS#7/CMS-Signaturen, da bei diesen Signaturen signierte Objekte nicht innerhalb eines Signaturobjekts referenziert werden. Auf diese Weise wird durch die Bereitstellung eines Elements 23 für ein signiertes Objekt innerhalb der Datenstruktureinheit 21 eine Verknüpfung zum Signaturobjekt 22 sichergestellt.

Eine Zusammenfassung aus einer Mehrzahl von computerbasierte Objekte eindeutig identifizierende Hash-Werten und einer einen Verschlüsselungszeitpunkt bezeichnenden Zeitangabe wird mittels eines privaten Signaturschlüssels einer vertrauenswürdigen Instanz zumindest auszugsweise verschlüsselt. Im vorliegenden Ausführungsbeispiel bedeutet auszugsweise, daß für die Zusammenfassung aus einer Mehrzahl von computerbasierte Objekte identifizierenden Hash-Werten und der den Verschlüsselungszeitpunkt bezeichneten Angabe ein eindeutig identifizierender Wert beispielsweise mittels eines Hash-Algorithmus berechnet wird und der Hash-Wert mittels des privaten Signaturschlüssels der vertrauenswürdigen Instanz verschlüsselt wird. Die den Verschlüsselungszeitpunkt bezeichnende Angabe oder ein Verweis auf einen Zeitstempel 3 wird in ein weiteres Reference-Element 17 eingebettet. Eine Mehrzahl von Reference-Elementen 17 bis 19 wird in ein Manifest-Element 16 der XML-Archivsignatur eingebettet. Das Manifest-Element 16 umfaßt damit Angaben bzw. Referenzen auf Angaben hinsichtlich einer Zeitangabe für eine Erstellung einer Archivsignatur und von der Archivsignatur 1 erfaßte signierte Objekte. Für das Manifest-Element 16 wird ein Hash-Wert berechnet und dieser mittels des privaten Signaturschlüssels der vertrauenswürdigen Instanz zur Erstellung einer Archivsignatur verschlüsselt.

Das Manifest-Element 16 ist in ein Object-Element 15 der XML-Archivsignatur 1 eingebettet und über ein in ein SignedInfo-Element 12 der XML-Archivsignatur 1 eingebettetes Reference-Element 123 zugreifbar. Das SignedInfo-Element 12 umfaßt neben dem Reference-Element 123 ein CanonicalizationMethod-Element 121 und ein Signature-Method-Element 122. Das CanonicalizationMethod-Element 121 dient einer Angabe eines Kanonisierungsalgorithmus, der auf das SignedInfo-Element 12 angewendet wird, bevor die Archivsignatur berechnet wird. Eine Anwendung eines Kanonisierungsalgorithmus vor Berechnung der Archivsigatur kann sinnvoll sein, da Hash-Algorithmen auf Basis einzelner Bits arbeiten und sich beispielsweise zwei XML-Dokumente in ihrer physischen Repräsentation unterscheiden können, aber dennoch logisch äquivalent sind. Zu Unterschieden die den Inhalte eines Dokuments nicht beeinflussen, zählen beispielsweise verwendeter Zeichensatz, Zeilenumbrüche, leere Tags, Reihenfolge der Attribute oder Kommentare.

Durch das Signature-Method-Element 122 wird ein bei der Berechnung der XML-Archivsignatur 1 verwendeter Verschlüsselungsalghoritmus spezifiziert. Der Wert der XML-Archivsignatur wird in ein SignedValue-Element 13 eingetragen. Optional kann eine Angabe eines öffentlichen Schlüssels der vertrauenswürdigen Instanz ergänzt werden. Diese Angabe wird in ein KeyInfo-Element 14 eingebettet und umfaßt zur Validierung der XML-Archivsignatur 1 verwendete Informationen.

Das in das SignedInfo-Element 12 eingebettete Reference-Element 123 umfaßt ein DigestMethod-Element 124 und ein DigestValue-Element 125. Das DigestMethod-Element 125 dient wiederum zur Spezifikation eines Hash-Algorithmus, während das DigestValue-Element 125 den über das Manifest-Element 16 berechneten Hash-Wert umfaßt. Das Reference-Element 123 weist außerdem ein URI-Attribut auf, das auf das Object-Element 15 oder das Manifest-Element 16 verweist. Das SignedInfo-Element 12, das SignedValue-Element 13, das KeyInfo-Element 14 und das Object-Element 15 werden schließlich zur Erzeugung der XML-Archivsignatur 1 in ein Signature-Element 11 eingebettet.

Um einen gegenseitigen Querverweis zwischen der XML-Archivsignatur 1 und dem Archiv 2 herzustellen weist das in das Manifest-Element 16 eingebettete Reference-Element 18 einen Verweis auf die als Item-Wrapper bezeichnete Datenstruktureinheit 21 auf. Dieser Verweis dient einer Identifizierung von der XML-Archiv-Signatur 1 umfaßte signierter computerbasierter Objekte. Demgegenüber dient das in die Datenstruktureinheit 21 eingebettete Element für einen Verweis auf die XML-Archivsignatur 1 einer Identifikation eines Zeitstempels 3 für das jeweilige Signaturobjekt bzw. signierte computerbasierte Objekt.

Eine mittels des vorangehend beschriebenen Verfahrens erzeugte elektronische Signatur wird überprüft, indem zunächst für ein signiertes computerbasiertes Objekt ein Hash-Wert berechnet wird. Anschließend wird der in das SignedValue-Element 13 eingebettete Wert der XML-Archivsignatur 1 die eine Mehrzahl von computerbasierter Objekte eindeutig identifizierenden Hash-Werten und eine den Verschlüsselungszeitpunkt bezeichnende Zeitangabe umfaßt, mittels des öffentlichen Schlüssels der vertrauenswürdigen Instanz entschlüsselt. Nach erfolgreicher Überprüfung des entschlüsselten Archivsignaturwerts und eines über das Manifest-Element 16 berechneten Hash-Werts auf Übereinstimmung wird der dem jeweiligen signierten computerbasierten Objekts zugeordnete Hash-Wert aus der XML-Archivsignatur 1 extrahiert. Abschließend werden der berechnete und der aus der XML-Archivsignatur 1 extrahierte Hash-Wert auf Übereinstimmung verglichen. Falls sich eine Übereinstimmung ergibt, ist die Signatur in Bezug auf das jeweilige von der XML-Archivsignatur 1 umfaßte computerbasierte Objekt validiert.

Die vorangehend beschriebenen Verfahren zur Erzeugung und Überprüfung elektronsicher Signaturen sind bevorzugt durch ein Steuerungsprogramm zur Erzeugung bzw. Überprüfung elektronischer Signaturen implementiert. Ein derartiges Steuerungsprogramm ist in einen Arbeitsspeicher einer Programmablaufsteuerungseinrichtung ladbar und führt die vorangehend beschriebenen Schritte zur Erzeugung bzw. Überprüfung einer elektronischen Signatur aus, wenn es in der Programmablaufsteuerungseinrichtung abläuft.

Die vorliegende Erfindung weist den Vorteil auf, das die Bearbeitungskomplexität zur Erstellung einer Archiv-Signatur lediglich im wesentlichen linear von der Anzahl archivierter Signaturobjekte abhängt, da neben dem Hash-Wert für die Archivsignatur lediglich jeweils ein Hash-Wert für ein archiviertes signiertes Objekt zu berechnen ist. Des weiteren setzt die Validierung einer Archivsignatur in Bezug auf ein individuelles signiertes Objekt lediglich die Kenntnis des jeweiligen signierten Objekt, nicht aber die Kenntnis weiterer von der Archivsignatur erfaßter signierter Objekte als solche voraus.

Die Anwendung der vorliegenden Erfindung ist nicht auf das beschriebene Ausführungsbeispiel beschränkt.

## Patentansprüche

1. Verfahren zur Erzeugung elektronischer Signaturen, bei dem
- für ein zu signierendes computerbasiertes Objekt ein das computerbasierte Objekt eindeutig identifizierender Wert berechnet wird,
- eine Zusammenfassung aus einer Mehrzahl von computerbasierte Objekte eindeutig identifizierenden Werten und einer einen Verschlüsselungszeitpunkt bezeichnende Zeitangabe mittels eines privaten Signaturschlüssels einer vertrauenswürdigen Instanz zumindest auszugsweise verschlüsselt wird.

2. Verfahren nach Anspruch 1,
bei dem für die Zusammenfassung aus der Mehrzahl von computerbasierte Objekte eindeutig identifizierenden Werten und
der den Verschlüsselungszeitpunkt bezeichnende Zeitangabe ein eindeutig identifizierender Wert berechnet und dieser mittels des privaten Signaturschlüssels der vertrauenswürdigen Instanz verschlüsselt wird.

3. Verfahren nach Anspruch 1 oder 2, bei dem
der ein computerbasiertes Objekt eindeutig identifizierende Wert und/oder der die Zusammenfassung eindeutig identifizierende Wert mittels eines Hash-Algorithmus berechnet wird.

4. Verfahren nach Anspruch 3, bei dem
der ein computerbasiertes Objekt eindeutig identifizierende Hash-Wert in ein Reference-Element für eine XML-Signatur eingebettet wird, die den Verschlüsselungszeitpunkt bezeichnende Zeitangabe in ein Reference-Element eingebettet wird, eine Mehrzahl von Reference-Elementen in ein Manifest-Element eingebettet wird, für das Manifest-Element ein Hash-Wert berechnet und dieser mittels des privaten Signaturschlüssels der vertrauenswürdigen Instanz zur Erstellung einer Archivsignatur verschlüsselt wird.

5. Verfahren nach Anspruch 4, bei dem
bei dem das Manifest-Element über ein in ein SignedInfo-Element der XML-Signatur eingebettetes Reference-Element zugreifbar ist.

6. Verfahren nach Anspruch 4 oder 5, bei dem
ein signiertes computerbasiertes Objekt zur Archivierung in eine Datenstruktureinheit eingebettet wird, die ein Signaturobjekt-Element und ein Element für einen Verweis auf eine Archivsignatur mit Zeitstempel umfaßt, und bei dem ein in das Manifest-Element eingebettetes Reference-Element einen Verweis auf die Datenstruktureinheit aufweist.

7. Verfahren nach Anspruch 6, bei dem
die Datenstruktureinheit ein Element für ein signiertes Objekt umfaßt.

8. Verfahren zur Überprüfung einer mittels eines Verfahrens nach Anspruch 1 erzeugten elektronischen Signatur, bei dem
- für ein signiertes computerbasiertes Objekt entsprechend einer vorgegebenen Funktion ein das computerbasierte Objekt eindeutig identifizierender Wert berechnet wird,
- eine Archivsignatur, die eine Mehrzahl von computerbasierte Objekte eindeutig identifizierenden Werten und eine einen Verschlüsselungszeitpunkt bezeichnende Zeitangabe umfaßt und mittels eines privaten Signaturschlüssels einer vertrauenswürdigen Instanz verschlüsselt ist, mittels eines öffentlichen Schlüssels der vertrauenswürdigen Instanz entschlüsselt wird,
- der dem signierten computerbasierten Objekt zugeordnete eindeutig identifizierende Wert aus der entschlüsselten Archivsignatur extrahiert wird,
- der berechnete und der extrahierte eindeutig identifizierende Wert auf Übereinstimmung verglichen werden.

9. Steuerungsprogramm zur Erzeugung elektronischer Signaturen, das in einen Arbeitsspeicher einer Programmablaufsteuerungseinrichtung ladbar ist und bei dessen Ausführung
- für ein zu signierendes computerbasiertes Objekt eine Berechnung eines das computerbasierte Objekt eindeutig identifizierenden Wertes veranlaßt wird,
- eine zumindest auszugsweise Verschlüsselung einer Zusammenfassung aus einer Mehrzahl von computerbasierte Objekte eindeutig identifizierenden Werten und einer einen Verschlüsselungszeitpunkt bezeichnende Zeitangabe mittels eines privaten Signaturschlüssels einer vertrauenswürdigen Instanz veranlaßt wird.
wenn das Steuerungsprogramm in der Programmablaufsteuerungseinrichtung abläuft.

10. Steuerungsprogramm zur Überprüfung eines mittels eines Verfahrens nach Anspruch 1 erzeugten elektronischen Signatur, das in einen Arbeitsspeicher einer Programmablaufsteuerungseinrichtung ladbar ist und bei dessen Ausführung
- für ein signiertes computerbasiertes Objekt entsprechend einer vorgegebenen Funktion ein das computerbasierte Objekt eindeutig identifizierender Wert berechnet wird,
- eine Archivsignatur, die eine Mehrzahl von computerbasierte Objekte eindeutig identifizierenden Werten und eine einen Verschlüsselungszeitpunkt bezeichnende Zeitangabe umfaßt und mittels eines privaten Signaturschlüssels einer vertrauenswürdigen Instanz verschlüsselt ist, mittels eines öffentlichen Schlüssels der vertrauenswürdigen Instanz entschlüsselt wird,
- der dem signierten computerbasierten Objekt zugeordnete eindeutig identifizierende Wert aus der entschlüsselten Archivsignatur extrahiert wird,
- der berechnete und der extrahierte eindeutig identifizierende Wert auf Übereinstimmung verglichen werden,
wenn das Steuerungsprogramm in der Programmablaufsteuerungseinrichtung abläuft.
